# EUROPÄISCHE PATENTSCHRIFT

(11) **EP 2 028 374 B1**
(45) Veröffentlichungstag und Bekanntmachung des Hinweises auf die Patenterteilung: **13.06.2018**
(21) Anmeldenummer: 08013069.3
(22) Anmeldetag: 19.07.2008
(51) Int. Cl.: F04D 29/42, F04D 29/46

(54) **Drallerzeugseinrichtung**
Swirl cup
Dispositif de tourbillonnement

(30) Priorität: 18.08.2007 DE 102007039120
(43) Veröffentlichungstag der Anmeldung: 25.02.2009
(73) Patentinhaber: Bayerische Motoren Werke Aktiengesellschaft, 80809 München (DE)
(72) Erfinder: Zaleschak, Hannes, 4052 Ansfelden (AT); Eisterlehner, Leopold, 4594 Steinbach/Steyr (AT); Wimmer, Rudolf, 4431 Haidershofen (AT)

(56) Entgegenhaltungen:
- DE-A1-102005 019 896
- US-A- 6 129 511

## Beschreibung

Die Erfindung betrifft eine Drallerzeugungseinrichtung zur drallbeaufschlagten Anströmung eines Verdichterlaufrads, insbesondere eines Turboladers für eine Brennkraftmaschine, mit jeweils einen festen und einen verstell- und/oder verformbaren Bereich aufweisenden elastischen Leitschaufeln.

In Hinblick auf eine Leistungssteigerung und/oder zur Verbesserung des Wirkungsgrades sowie auch der Abgasqualität ist es bekannt, Brennkraftmaschinen mit verdichteter Luft zu beaufschlagen; in diesem Zusammenhang haben sich beispielsweise abgasgetriebene Turbolader bewährt.

Der Betrieb derartiger Verdichter erfolgt aufgrund der besseren Dynamikeigenschaften häufig nahe der Pumpgrenze im Verdichterkennfeld, was allerdings akustische Nachteile in Form sehr störender Zischgeräusche bedingt, gegebenenfalls führt die Instabilität bei länger andauerndem Betrieb in diesem Bereich sogar zu Schäden am Verdichterlaufrad. Ferner ist der Betrieb im Bereich der Pumpgrenze in besonderem Maße verlustbehaftet, sodass sich ein sehr schlechter Wirkungsgrad ergibt. Auch im Zusammenhang mit (Kreisel-)Pumpen im Allgemeinen stellen sich die beschriebenen Probleme.

Eine Möglichkeit zur Abhilfe besteht bei Abgasturboladern im geregelten Betrieb, wobei zwischen turbinen- und verdichterseitiger Regelung unterschieden wird. Im Rahmen einer verdichterseitigen Regelung können dem Verdichterlaufrad vorgeordnete Luftleitgitter zur Anwendung kommen.

Beispielsweise beeinflusst ein verdichtereingangsseitig angeordneter Drallerzeuger am Verdichtereintritt die Strömungsrichtung der Luft derart, dass es im kritischen Kennfeldbereich zu einer Reduktion der Eintrittsstoßverluste am Schaufelrad kommt. Es wird somit eine vorteilhafte Verschiebung der Pumpgrenze in Richtung kleinerer Massenströme erreicht.

Als besonders günstig hat sich eine wie mit der EP 1 416 123 A2 offenbarte Drallerzeugungseinrichtung zur drallbeaufschlagten Anströmung eines Laufrads eines Verdichters oder einer Pumpe erwiesen, welche einen in das Gehäuse und/oder in die Saugleitung einbringbaren, dem Laufrad vorgeordneten Drallerzeuger aus Kunststoff mit elastisch verformbaren Leitschaufeln aufweist. Hinsichtlich der Offenbarung des Drallerzeugers aus Kunststoff mit elastisch verformbaren Leitschaufeln wird auf die EP 1 416 123 A2 verwiesen und deren Inhalt hiermit in die vorliegende Anmeldung mit aufgenommen. Ferner wird zum technologischen Hintergrund auf die DE 2 060 271 A1 verwiesen, welche ein Verfahren zur selbsttätigen Einstellung des Eintrittsdralles bei Verdichtern von Abgasturboladern sowie einen Leitapparat dazu beschreibt.

Die bekannten Drallerzeuger sind aufgrund der Verstellung durch die Gaskraft selbst zwar vom Massendurchsatz abhängig verstell- bzw. verformbar, es hat sich jedoch gezeigt, dass in bestimmten Betriebssituationen diese gaskraftabhängige Regelung alleine nicht ausreichend ist.

Daher wurde mit der DE 10 2005 019 896 A1 vorgeschlagen, die verstellund/oder verformbaren Bereiche der Leitschaufeln mit einem Stellabschnitt zu verbinden und so eine von den auf die Drallerzeugungseinrichtung wirkenden aerodynamischen Kräften unabhängige aktive Steuerung/Regelung zu ermöglichen. Der Stellabschnitt ist ringförmig ausgebildet und mit den Leitschaufeln endseitig durch einteilige Herstellung im Spritzgussverfahren verbunden. Insbesondere aufgrund der einteiligen Ausführung von Leitschaufeln und Stellabschnitt sowie der ringförmigen Ausbildung des Stellabschnitts und dessen Antriebs von radial außen beansprucht die Drallerzeugungseinrichtung einen sehr großen Bauraum. Außerdem erfolgt bei einer Verstellung/Verformung der Leitschaufeln eine axiale Verlagerung des Stellabschnitts relativ zu einem Trägerabschnitt der Drallerzeugungseinrichtung, was hinsichtlich der eine Verzahnung aufweisenden Stellantriebsverbindung nachteilig ist; ein radialer Bewegungsausgleich zwischen Leitschaufeln und Stellabschnitt ist nicht möglich.

Die US-6,129,511 zeigt eine Vorrichtung und ein Verfahren zum Regulieren der Durchflussmenge eines Gases durch einen Kompressor, der Leitschaufeln und Umlenker mit variabler Geometrie aufweist.

Aufgabe der Erfindung ist daher, eine eingangs genannte Drallerzeugungseinrichtung bereitzustellen, welche auch unabhängig von den auf sie wirkenden aerodynamischen Kräften aktiv steuer-/regelbar ist, welche zugleich einen nur geringen Bauraum beansprucht und einen Bewegungsausgleich der Leitschaufeln relativ zur Stelleinrichtung ermöglicht.

Die Lösung der Aufgabe erfolgt mit den Merkmalen des Anspruchs 1, wobei gemäß der zugrundeliegenden Idee eine mit den verstell- und/oder verformbaren Bereichen der Leitschaufeln zusammenwirkende, baulich gesonderte Stelleinrichtung vorgesehen ist. Dadurch kann die Stelleinrichtung bauraumgünstig angeordnet und ein Bewegungsausgleich der Leitschaufeln relativ zu Stelleinrichtung ermöglicht werden.

Besonders zu bevorzugende Ausgestaltungen und Weiterbildungen der Erfindung sind Gegenstand der Unteransprüche.

Vorzugsweise umfasst die Stelleinrichtung einen Aktuator, eine Winkelumlenkung sowie eine Ausgangswelle. Dadurch ergibt sich eine große Freiheit bei der baulichen Anordnung des Aktuator in Bezug auf die Leitschaufeln, sodass der Aktuator bauraumgünstig angeordnet werden kann. Erfindungsgemäß umfasst der Trägerabschnitt ein zentrales, entlang seiner Längsachse hohles Mittelteil und die Ausgangswelle der Stelleinrichtung ist durch das hohle Mittelteil des Trägerabschnitts hindurch geführt. Dies stellt eine besonders hoch integrierte Ausführung dar und ermöglicht eine Anordnung des Aktuator auf der stromauf der Leitschaufeln liegenden Seite.

Besonders vorteilhaft ist es, wenn die Ausgangswelle der Stelleinrichtung abtriebsseitig eine Verbindungseinrichtung zur Verbindung mit den verstellund/oder verformbaren Bereichen der Leitschaufeln aufweist und diese drehfest mit der Ausgangswelle der Stelleinrichtung verbunden ist und einzelne, den verstell- und/oder verformbaren Bereichen der Leitschaufeln zugeordnete Verbindungsbereiche aufweist. Dadurch ergeben sich mehrere bauliche Schnittstellen, die es ermöglichen, einen Bewegungsausgleich der Leitschaufeln relativ zu Stelleinrichtung vorzusehen.

Zweckmäßigerweise ist mittels der Verbindungseinrichtung eine radiale Bewegung der verstell- und/oder verformbaren Bereiche der Leitschaufeln relativ zur Ausgangswelle des Aktuators ermöglicht, sodass bei einer

Verstellung/Verformung der Leitschaufeln ein zwischen den Leitschaufeln und der Stelleinrichtung, insbesondere der Ausgangswelle des Aktuators, ein Ausgleich in radialer Richtung erfolgen kann. Alternativ oder zusätzlich ist eine axiale Bewegung der verstell- und/oder verformbaren Bereiche der Leitschaufeln relativ zur Stelleinrichtung ermöglicht, sodass bei einer Verstellung/Verformung der Leitschaufeln zwischen den Leitschaufeln und der Stelleinrichtung ein Ausgleich in axialer Richtung erfolgen kann.

Gemäß einer bevorzugten Ausgestaltung der Erfindung ist der Antrieb mittels einer Steuereinrichtung auf Basis von Eingangsgrößen, wie Brennkraftmaschinendrehzahl, Turboladerdrehzahl, Abgasdruck, Abgasmassenstrom oder Ladeluftmassenstrom und/oder in der Steuereinrichtung hinterlegter Parameter steuerbar/regelbar.

Zweckmäßigerweise umfasst die Drallerzeugungseinrichtung eine Einrichtung zur Bestimmung der Stellung/Form der Leitschaufeln. Diese Einrichtung generiert ein Signal, das ebenfalls der Steuereinrichtung zur Verfügung steht.

Nachfolgend wird ein besonders zu bevorzugendes Ausführungsbeispiel der Erfindung unter Bezugnahme auf Figuren näher erläutert, dabei zeigen schematisch und beispielhaft
- Figur 1: einen Einlasskanal eines Abgasturboladers einer Brennkraftmaschine mit einer verstellbaren Drallerzeugungs-einrichtung,
- Figur 2: einen Einlasskanal eines Abgasturboladers einer Brennkraftmaschine mit einer verstellbaren Drallerzeugungs-einrichtung ohne Kanaloberschale und
- Figur 3: eine Detailansicht der Stelleinrichtung der Drallerzeugungs-einrichtung.

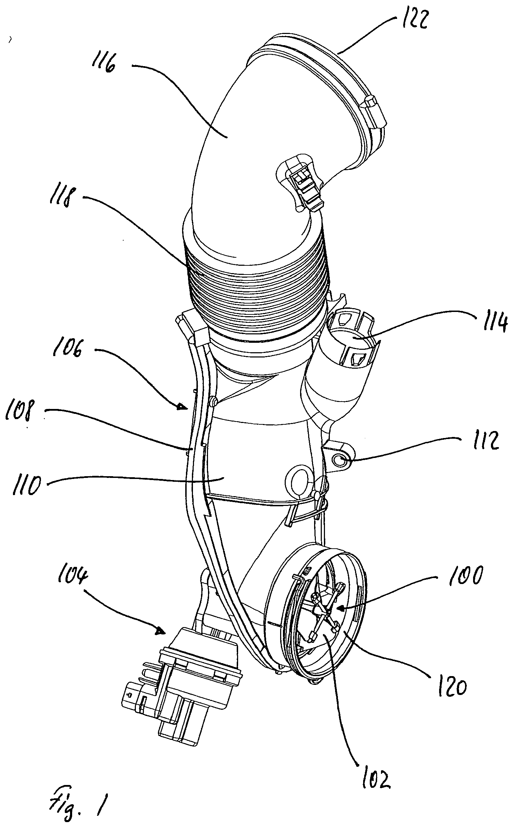

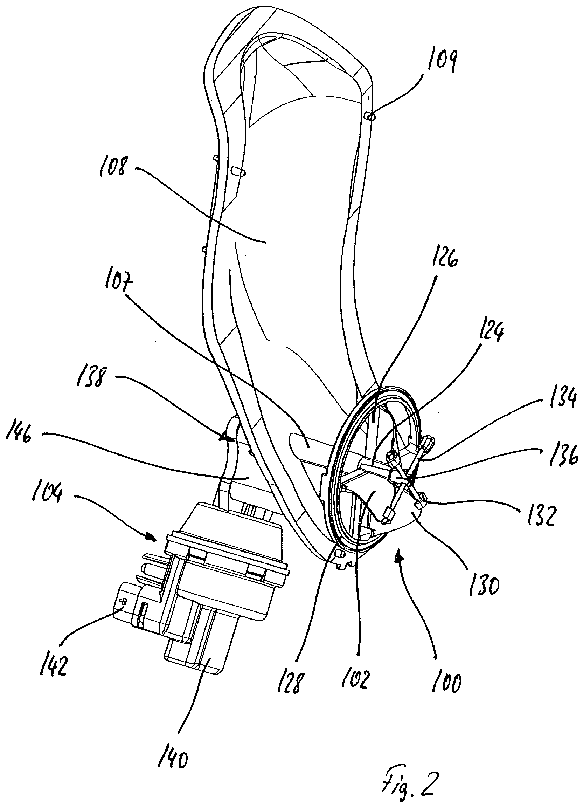

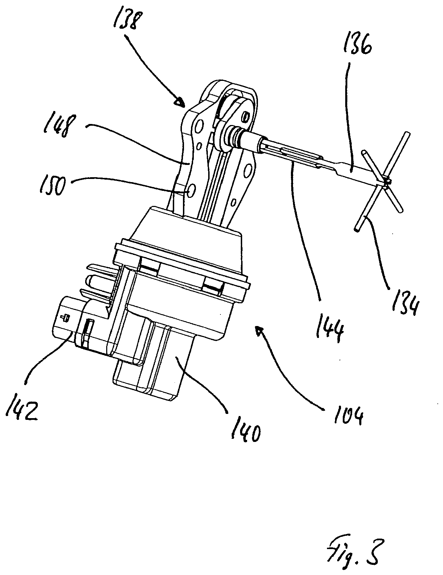

Figur 1 zeigt einen Lufteinlasskanal 106 eines hier nicht dargestellten Abgasturboladers einer Brennkraftmaschine mit einer verstellbaren Drallerzeugungseinrichtung 100, eine Ansicht ohne Kanaloberschale 110 ist in Figur 2 gezeigt. In Figur 3 ist eine Detailansicht der Stelleinrichtung 104 der Drallerzeugungseinrichtung 100 gezeigt.

Der Lufteinlasskanal 106 weist lufteinlassseitig einen Einlass 122 und abgasturboladerseitig einen Auslass 120 auf und ist im Wesentlichen aus Kunststoff, wie gegebenenfalls glasfaserverstärktem Polyamid, hergestellt. Zur abgasturboladerseitigen Befestigung des Lufteinlasskanals 106 ist eine lösbare Federringverbindung vorgesehen, lufteinlassseitig erfolgt ein Anschluss an einen Luftsammler mittels einer Schlauchschellenverbindung. Der Lufteinlasskanal 106 umfasst abgasturboladerseitig ein gewinkeltes Teilstück, das aus zwei Halbschalen 108, 110 gebildet ist und ein lufteinlassseitig gewinkeltes Rohrteilstück 116, das mit dem abgasturboladerseitigen Teilstück mittels einer flexiblen Wellschlauchverbindung verbunden ist. Der Lufteinlasskanal 106 umfasst integriert eine Anschlussstelle 114 für einen Blow-by-Gas-Eintritt einer Kurbelgehäuseentlüftung mit Heizelement sowie Befestigungsstellen 112 zur Befestigung des Lufteinlasskanals 106 an einer Brennkraftmaschine.

Insbesondere das abgasturboladerseitige Teilstück des Lufteinlasskanals 106 ist strömungs- stabilitätsoptimiert ausgeführt, wobei Kanalunterschale 108 und Kanaloberschale 110 zur Verbindung miteinander jeweils einen zumindest annähernd umlaufenden Flansch aufweisen, der zugleich als Verstärkungsrippe wirkt. Um eine lagegenaue Verbindung von Kanalunterschale 108 und Kanaloberschale 110 zueinander zu gewährleisten, weist die Kanalunterschale 108 im Flanschbereich mit entsprechenden Löchern im Flanschbereich der Kanaloberschale 110 korrespondierende Stifte 109 auf. Anstelle der Stifte 109 kann auch eine andere Verbindungskontur zur Lagesicherung verwendet werden.

Im Winkelbereich des abgasturboladerseitigen Teilstücks des Lufteinlasskanals 106 ist die Drallerzeugungseinrichtung 100 angeordnet. Dabei ist der Drallerzeuger (102, 124, 126, 130) im Lufteinlasskanal 106 angeordnet und die Stelleinrichtung 104 ist im Winkelbereich nach außen geführt, sodass der Aktuator 140 lufteinlasskanalaußenseitig angeordnet werden ist.

Die Kanalunterschale 108 weist lufteinlasskanalinnenseitig zur Durchführung der Stelleinrichtung 104 und Führung der Ausgangswelle 144 der Stelleinrichtung 104 einen hohlen, rohrförmigen Fortsatz 107 auf, lufteinlasskanalaußenseitig ist an der Kanalunterschale 108 ein Befestigungsbereich 146 zur Durchführung der Stelleinrichtung 104, Führung der Ausgangswelle 144 und Befestigung der Stelleinrichtung 104 vorgesehen. Der Fortsatz 107 liegt im Anströmbereich vor dem Drallerzeuger (102, 124, 126, 130), stellt jedoch aufgrund seiner geringen Abmaße und seines strömungsgünstigen Querschnitts einen nur geringen Strömungswiderstand dar. Die wesentlichen Teile der Stelleinrichtung 104 sind außerhalb des Lufteinlasskanals 106 angeordnet und beeinträchtigen daher die Einlassströmung nicht.

Der Drallerzeuger (102, 124, 126, 130) weist vier Flügel 102 auf und ist einteilig in Spritzgussverfahren aus einem relativ weichen, thermoplastischen Kunststoff mit einer Härte von ca. 45-65 Shore D hergestellt, sodass die Flügel 102 die erforderliche Flexibilität aufweisen. Die Bereiche, welche eine höhere Stabilität erfordern - wie der Trägerabschnitt mit seinem ringförmigen, radial äußere Bereich 128, den Anströmkanten 126 der Flügel 102 und dem Mittelteil 124 - sind konstruktiv insbesondere mittels Versteifungsrippen oder Materialverstärkungen entsprechend ausgestaltet.

Ausgehend von den Anströmkanten 126 erstrecken sich die Flügel 102 in Strömungsrichtung und weisen dabei zur Drallerzeugung eine Krümmung in radialer Richtung auf. Vorliegend wird die Strömung in einen Rechtsdrall versetzt, wobei die Richtung der Flügelkrümmung selbstverständlich von der Drehrichtung des im Strömungsverlauf nachfolgenden Pumpen- oder Verdichterlaufrades abhängt.

Die Flügel 102 sind an ihrer radial inneren Seite im Mittelteil 124 über ca. ihre halbe Länge axial zumindest annähernd gerade miteinander verbunden, so dass jeweils ein freies, besonders verformbares Flügelende 130 verbleibt. Außenseitig kann sich die Flügelkrümmung vom Flügelende 130 bis in den Bereich der Anströmkante 126 fortsetzen, da hier die Flügel 102 nicht axial gerade festgelegt sind.

In Montagelage ist der Drallerzeuger mittels dem ringförmigen, radial äußeren Bereich 128 festgelegt, die diesen Bereich 128 in axialer Richtung überragenden Bereiche, wie Anströmkanten 126 und Flügel 102, weisen zur Aufnahme im Saugrohr oder im Ansaugstutzen des Turboladers einen gegenüber dem äußeren Bereich 128 verringerten Durchmesser auf. Die Kanten der Flügelenden 130 sind in Strömungsrichtung auf einen geringeren Durchmesser zurückgezogen, die Abschlüsse sind gerundet.

Das Mittelteil 124 des Drallerzeugers ist entlang der Längsachse hohl ausgebildet, sodass die Ausgängswelle 144 der Stelleinrichtung 104 durch das Mittelteil 124 des Drallerzeugers hindurch geführt werden kann. Abtriebsseitig weist die Stelleinrichtung 104 eine Verbindungseinrichtung 134, 136 zur Verbindung mit den verstell- und/oder verformbaren Bereichen 130 der Leitschaufeln 102 auf. Ein wellenartiger Teil 136 der Verbindungseinrichtung ist koaxial und drehfest mit der Ausgangswelle 144 der Stelleinrichtung 104 verbunden, hierfür ist das abtriebsseitige Ende der Ausgangswelle 144 zur Aufnahme des wellenartigen Teils 136 der Verbindungseinrichtung geschlitzt ausgeführt. Mit dem wellenartigen Teil 136 der Verbindungseinrichtung ist abtriebsseitig ein kreuzstrebenartiges Teil 134 verbunden, wobei die Strebenanzahl der Anzahl der Leitschaufeln 120 entspricht und jeder Leitschaufel 120 eine Strebe zugeordnet ist.

Die Streben weisen einen profilierten, vorliegend einen runden Querschnitt auf und sind in korrespondierend profilierten Aufnahmen 132 an den verstellund/oder verformbaren Bereichen 130 der Leitschaufeln 102 aufgenommen. Die Verbindung der Streben mit den verformbaren Bereichen 130 der Leitschaufeln 102 erlaubt eine Relativbewegung in radialer Richtung, sodass eine radiale Bewegung der verstell- und/oder verformbaren Bereiche 130 der Leitschaufeln 102 relativ zur Ausgangswelle 144 der Stelleinrichtung 104 ermöglicht ist und ein Ausgleich bei Verstellung der Leitschaufeln erfolgen kann.

Das Gehäuse 148 der Stelleinrichtung 104 ist mit Befestigungsstellen 150 zur Befestigung der Stelleinrichtung 104 am Befestigungsbereich 146 der Kanalunterschale 108 versehen. Zur Erzeugung der Stellbewegung ist ein Aktuator 140, vorliegend ein Unterdruckantrieb mit WRM oder ein elektromotorischer Rotationsantrieb, vorgesehen. Mittels einer Winkelumlenkung 138 wird die Drehbewegung des Aktuator 140 umgelenkt. Zur Energieversorgung und Steuerung/Regelung der Stelleinrichtung 104 ist ein Steckverbinderanschluss 142 vorgesehen.

## Patentansprüche

1. Drallerzeugungseinrichtung (100) zur drallbeaufschlagten Anströmung eines Verdichterlaufrads, insbesondere eines Turboladers für eine Brennkraftmaschine, mit jeweils einen festen und einen verstell- und/oder verformbaren Bereich (130) aufweisenden elastischen Leitschaufeln (102), wobei die festen Bereiche der Leitschaufeln (102) mit einem Trägerabschnitt (124, 126, 128) verbunden sind, **gekennzeichnet durch** eine mit den verstell- und/oder verformbaren Bereichen (130) der Leitschaufeln (102) zusammenwirkende, baulich gesonderte Stelleinrichtung (104), wobei der Trägerabschnitt (124, 126, 128) ein zentrales, entlang seiner Längsachse hohles Mittelteil (124) umfasst und die Ausgangswelle (144) der Stelleinrichtung (104) durch das hohle Mittelteil (124) des Trägerabschnitts (124, 126, 128) hindurch geführt ist.

2. Drallerzeugungseinrichtung (100) nach Anspruch 1, **dadurch gekennzeichnet, dass** die Stelleinrichtung (104) einen Aktuator (140), eine Winkelumlenkung (138) sowie eine Ausgangswelle (144) umfasst.

3. Drallerzeugungseinrichtung (100) nach einem der vorhergehenden Ansprüche, **dadurch gekennzeichnet, dass** die Ausgangswelle (144) der Stelleinrichtung (104) abtriebsseitig eine Verbindungseinrichtung (134, 136) zur Verbindung mit den verstell- und/oder verformbaren Bereichen (130) der Leitschaufeln (102) aufweist.

4. Drallerzeugungseinrichtung (100) nach einem der vorhergehenden Ansprüche, **dadurch gekennzeichnet, dass** die Verbindungseinrichtung (134, 136) drehfest mit der Ausgangswelle (144) der Stelleinrichtung (104) verbunden ist und einzelne, den verstell- und/oder verformbaren Bereichen (130) der Leitschaufeln (102) zugeordnete Verbindungsbereiche (134) aufweist.

5. Drallerzeugungseinrichtung (100) nach einem der vorhergehenden Ansprüche, **dadurch gekennzeichnet, dass** mittels der Verbindungseinrichtung (134, 136) eine radiale Bewegung der verstellund/oder verformbaren Bereiche (130) der Leitschaufeln (102) relativ zur Ausgangswelle (144) der Stelleinrichtung (104) ermöglicht ist.

6. Drallerzeugungseinrichtung (100) nach einem der vorhergehenden Ansprüche, **dadurch gekennzeichnet, dass** eine axiale Bewegung der verstell- und/oder verformbaren Bereiche (130) der Leitschaufeln (102) relativ zur Stelleinrichtung (104) ermöglicht ist.

7. Drallerzeugungseinrichtung (100) nach einem der vorhergehenden Ansprüche, **dadurch gekennzeichnet, dass** die Stelleinrichtung (104) mittels einer Steuereinrichtung steuerbar/regelbar ist.

8. Drallerzeugungseinrichtung (100) nach einem der vorhergehenden Ansprüche, **dadurch gekennzeichnet, dass** die Stelleinrichtung (104) auf Basis von Eingangsgrößen, wie Brennkraftmaschinendrehzahl, Turboladerdrehzahl, Abgasdruck, Abgasmassenstrom oder Ladeluftmassenstrom und/oder in der Steuereinrichtung hinterlegter Parameter gesteuert ist.

9. Drallerzeugungseinrichtung (100) nach einem der vorhergehenden Ansprüche, **gekennzeichnet durch** eine Einrichtung zur Bestimmung der Stellung/Form der Leitschaufeln (102).

## Claims

1. A vortex generation means (100) for vortex-loaded flow onto a compressor impeller, especially a turbocharger for an internal combustion engine, with elastic guide blades (102) having in each case a fixed and an adjustable and/or deformable region (130), wherein the fixed regions of the guide blades (102) are connected to a support portion (124, 126, 128), **characterised by** a structurally separated setting means (104) which cooperates with the adjustable and/or deformable regions (130) of the guide blades (102), wherein the support portion (124, 126, 128) comprises a central middle part (124) which is hollow along its longitudinal axis and the output shaft (144) of the setting means (104) is guided through the hollow middle part (124) of the support portion (124, 126, 128).

2. A vortex generation means (100) according to Claim 1, **characterised in that** the setting means (104) comprises an actuator (140), an angular deflection means (138) and an output shaft (144).

3. A vortex generation means (100) according to one of the preceding claims, **characterised in that** the output shaft (144) of the setting means (104) has on the output side a connecting means (134, 136) for connecting to the adjustable and/or deformable regions (130) of the guide blades (102).

4. A vortex generation means (100) according to one of the preceding claims, **characterised in that** the connecting means (134, 136) is connected to the output shaft (144) of the setting means (104) so as not to rotate and has individual connection regions (134) associated with the adjustable and/or deformable regions (130) of the guide blades (102).

5. A vortex generation means (100) according to one of the preceding claims, **characterised in that** a radial movement of the adjustable and/or deformable regions (130) of the guide blades (102) relative to the output shaft (144) of the setting means (104) is made possible by means of the connecting means (134, 136).

6. A vortex generation means (100) according to one of the preceding claims, **characterised in that** an axial movement of the adjustable and/or deformable regions (130) of the guide blades (102) relative to the setting means (104) is made possible.

7. A vortex generation means (100) according to one of the preceding claims, **characterised in that** the setting means (104) can be controlled/regulated by means of a control means.

8. A vortex generation means (100) according to one of the preceding claims, **characterised in that** the setting means (104) is controlled on the basis of input variables, such as internal combustion engine speed, turbocharger speed, exhaust pressure, exhaust mass flow or charge-air mass flow and/or parameters stored in the control means.

9. A vortex generation means (100) according to one of the preceding claims, **characterised by** a means for determining the position/shape of the guide blades (102).

## Revendications

1. Dispositif générateur de tourbillons (100) permettant de faire circuler un flux tourbillonnant vers une roue à aubes, en particulier d'un turbocompresseur à suralimentation d'un moteur à combustion interne, comprenant des aubes directrices élastique (102) comportant respectivement une zone fixe et une zone (130) réglable et/ou déformable, les zones fixes des aubes directrices (102) étant reliées à un segment de support (124, 126, 128),
**caractérisé par**
un dispositif de réglage (104) de construction indépendante coopérant avec les zones réglables et/ou déformables (130) des aubes directrices (102), le segment de support (124, 126, 128) comportant une partie médiane creuse centrale (124) s'étendant le long de son axe longitudinal, et l'arbre de sortie (144) du dispositif de réglage (104) passant au travers de la partie médiane creuse (124) du segment de support (124, 126, 128).

2. Dispositif générateur de tourbillons (100) conforme à la revendication 1,
**caractérisé en ce que**
le dispositif de réglage (104) comporte un actionneur (140), un coudage angulaire (138) et un arbre de sortie (144).

3. Dispositif générateur de tourbillons (100) conforme à l'une des revendications précédentes,
**caractérisé en ce que**
l'arbre de sortie (144) du dispositif de réglage (104) comporte, côté entraîné, un dispositif de liaison (134, 136) permettant sa liaison avec les zones réglables et/ou déformables (130) des aubes directrices (102).

4. Dispositif générateur de tourbillons (100) conforme à l'une des revendications précédentes,
**caractérisé en ce que**
le dispositif de liaison (134, 136) est relié solidairement en rotation avec l'arbre de sortie (144) du dispositif de réglage (104), et comporte des zones de liaison indépendantes (134) associées aux zones réglables et/ou déformables (130) des aubes directrices (102).

5. Dispositif générateur de tourbillons (100) conforme à l'une des revendications précédentes,
**caractérisé en ce que**
le dispositif de liaison (134, 136) permet d'obtenir un déplacement radial des zones réglables et/ou déformables (130) des aubes directrices (102) par rapport à l'arbre de sortie (144) du dispositif de réglage (104).

6. Dispositif générateur de tourbillons (100) conforme à l'une des revendications précédentes,
**caractérisé en ce qu'**
un déplacement axial des zones réglables et/ou déformables (130) des aubes directrices (102) par rapport au dispositif de réglage (104) est possible.

7. Dispositif générateur de tourbillons (100) conforme à l'une des revendications précédentes,
**caractérisé en ce que**
le dispositif de réglage (104) peut être commandé / régulé au moyen d'un dispositif de commande.

8. Dispositif générateur de tourbillons (100) conforme à l'une des revendications précédentes,
**caractérisé en ce que**
l'installation de réglage (104) est commandée sur le fondement de grandeurs d'entrée telles que la vitesse de rotation du moteur, la vitesse de rotation du turbocompresseur, la pression des gaz d'échappement le débit massique de gaz d'échappement ou le débit massique d'air de charge et/ou de paramètres enregistrés dans le dispositif de commande.

9. Dispositif générateur de tourbillons (100) conforme à l'une des revendications précédentes,
**caractérisé par**
un dispositif permettant de déterminer la position / la forme des aubes directrices (102).
